# EUROPÄISCHE PATENTSCHRIFT

(11) **EP 0 449 768 B1**
(45) Veröffentlichungstag und Bekanntmachung des Hinweises auf die Patenterteilung: **23.11.1994**
(21) Anmeldenummer: 91810123.9
(22) Anmeldetag: 25.02.1991
(51) Int. Cl.: F15B 13/042, F16K 17/02

(54) **Schnellentlüftungsventil**
Quick air relief valve
Soupape à mise rapide à l'atmosphère

(30) Priorität: 30.03.1990 CH 1062/90
(43) Veröffentlichungstag der Anmeldung: 02.10.1991
(73) Patentinhaber: Press Controls AG Rümlang, 8153 Rümlang (CH)
(72) Erfinder: Wirth, Gustav, CH-8185 Winkel (CH)
(74) Vertreter: Tetzner, Volkmar, Dr.-Ing. Dr. jur.

(56) Entgegenhaltungen:
- CH-A- 541 101
- DE-A- 2 519 026
- DE-A- 3 151 567
- DE-A- 3 739 981
- DE-B- 1 576 088

## Beschreibung

Die Erfindung betrifft ein Schnellentlüftungsventil gemäß dem Oberbegriff des Anspruches 1.

Aus der Praxis ist ein derartiges Schnellentlüftungsventil bekannt, das als Winkelverschraubung ausgebildet ist und aus relativ komplizierten Teilen besteht. Es ist daher in der Anwendung begrenzt und relativ teuer in der Herstellung.

Durch die DE-B-1 576 088 ist ein Schnellentlüftungsventil gemäß dem Oberbegriff des Anspruches 1 bekannt. Bei diesem bekannten Ventil schließt der in axialer Richtung hin- und herbewegliche Kolben mit seiner axialen Stirnfläche die axial angeordnete Entlüftungsöffnung ab.

Der vorliegenden Erfindung liegt die Aufgabe zugrunde, das Schnellentlüftungsventil gemäß dem Oberbegriff des Anspruches 1 derart weiterzuentwickeln, daß deren Teile relativ einfach und kostengünstig herstellbar sind.

Erfindungsgemäß wird diese Aufgabe durch die kennzeichnenden Merkmale des Anspruches 1 gelöst, in dem die Entlüftungsöffnung quer zur Bewegungsrichtung des Kolbens angeordnet und zum Sperren durch eine Umfangsfläche des Kolbens abdeckbar ist.

Durch eine derartige Anordnung der Entlüftungsöffnung wird eine äußerst einfache Ventilkonstruktion mit relativ einfach zu fertigenden Teilen erreicht. Gehäuse, Kolben und Ventil können als einfache Drehteile auf Drehautomaten hergestellt werden. Besonders vorteilhaft ist es, daß der Auslaß sowohl auf der gleichen Achse wie der Einlaß als auch in einem rechten Winkel dazu angeordnet werden kann. Dies ermöglicht die Ausbildung des Schnellentlüftungsventils sowohl als gewöhnliche Verschraubung als auch als Winkelverschraubung.

In einer vorteilhaften Ausführungsform des Schnellentlüftungsventils ist die Kammer axial angeordnet und als zylindrische Aussparung, z. B. als Bohrung, im Ventilgehäuse ausgebildet, und die Entlüftungsöffnung ist radial angeordnet, wobei der Kolben, wenn er vom Arbeitsdruck beaufschlagt wird, die Entlüftungsöffnung abdeckt. Im Gegensatz zum bekannten Stand der Technik, wo sowohl die Kammer als auch die Entlüftungsöffnung axial angeordnet sind, ergibt sich eine wesentlich einfachere Konstruktion.

Zweckmässigerweise weist der Kolben auslaßseitig eine Dichtung in einer ringförmigen Nut auf, wobei die Dichtung mit einem Ventilsitz am Ende der Kammer zusammenarbeitet. Die Nut ist so tief bemessen, dass die Dichtung die Wandung der Kammer praktisch nicht berührt. Weiter weist der Kolben einlaßseitig vorteilhaft einen Konus auf, wobei beim Konus eine Dichtung, z.B. ein O-Ring, vorgesehen ist, welche jeweils durch den Arbeitsdruck gegen den Konus und die Wandung der Kammer gepresst wird. Mit dieser Ausbildung kann der Oeffnungsdruck des Schnellentlüftungsventils praktisch bei Null gehalten werden, weil die Dichtungen eine Bewegung des Kolbens nicht hindern. Sie üben also keine oder nur äusserst geringe Reibungskräfte auf die Wandung der Kammer aus, in welcher sich der Kolben bewegen kann. Trotzdem wird die Entlüftungsöffnung gegen das unter dem Arbeitsdruck stehende Medium in der Kammer ausgezeichnet abgedichtet.

Bei einer zweckmässigen Ausführungsform weist das Ventil einen in einer Durchgangsöffnung im Kolben angeordneten Ventilkolben auf, welcher normalerweise die Durchgangsöffnung verschliesst, aber durch den Arbeitsdruck entgegen der Kraft einer Ventilfeder verschiebbar ist, um die Durchgangsöffnung frei zu geben. Diese Ventilkonstruktion ist sehr einfach und betriebssicher.

Eine zweckmässige Ausgestaltung des Schnellentlüftungsventils sieht vor, dass der Ventilkolben eine axiale Ausnehmung, eine Stirnwand und mindestens eine bei der Stirnwand angeordnete radiale Oeffnung aufweist, und dass an der Peripherie der Stirnwand in einer Nut eine ringförmige Dichtung angeordnet ist, welche im geschlossenen Zustand des Ventils durch die Kraft der Ventilfeder gegen den Kolben gepresst wird, um die Durchgangsöffnung zu verschliessen. Dies ergibt eine sehr betriebssichere Ventilkonstruktion. Weiter ist der Ventilkolben sehr einfach und billig in der Herstellung.

Zweckmässigerweise ist die Kammer für den Kolben ein Abschnitt in einer Bohrung mit verschiedenen Abschnitten verschiedenen Durchmessers. Dabei kann der Hub des Kolbens einerseits durch einen Abschnitt kleineren Durchmessers und andererseits durch einen in einem Abschnitt vorzugsweise grösseren Durchmessers eingeschobenen Ring begrenzt sein. Dies ermöglicht es, das Gehäuse als sehr einfachen Drehteil auszugestalten. So ist es möglich, dass das Ventilgehäuse einstückig ist und aus einem Drehteil besteht, der zwei Anschlüsse, z.B. Schraubanschlüsse, aufweist. Im Gegensatz zum zitierten Stand der Technik kann also bei dieser Ausführungsform auf einen zweiten Gehäuseteil verzichtet werden.

Eine andere Ausgestaltung des Schnellentlüftungsventils sieht vor, dass das Ventilgehäuse aus einem ersten und einem zweiten Teil, z.B. Drehteil, besteht, die rechtwinklig zueinander angeordnet sind und je einen Anschluss, z.B. einen Schraubanschluss, aufweisen. Dabei weist vorteilhaft der zweite Drehteil des Ventilgehäuses zur Aufnahme des ersten Teils des Ventilgehäuses eine Querbohrung auf, wobei ein ringförmiger Raum gebildet wird, und wobei das erste Teil eine radiale Oeffnung besitzt, welche mit dem ringförmigen Raum kommuniziert. Diese Ausgestaltung ermöglicht es, beim Befestigen des Schnellentlüftungsventils, das zweite Teil in jede beliebige Lage zu drehen, was den Anschluss der Druckleitung an den entsprechenden Anschlussstutzen des Schnellentlüftungsventils erleichtert.

Eine vorteilhafte Ausführungsform sieht vor, dass sowohl das erste Teil als auch das zweite Teil einen Einlass aufweisen und dass wahlweise der eine oder der andere Einlass mit einem lösbaren Verschluss, z.B. einem Schraubverschluss verschlossen ist. Dies ermöglicht es, die Druckleitung koaxial oder im rechten Winkel zur Ventilachse anzuschliessen. Für beide Anschlussarten kann somit das gleiche Schnellentlüftungsventil verwendet werden. Will man jedoch das Schnellentlüftungsventil als gewöhnliche Verschraubung und nicht als Winkelverschraubung verwenden, so kann der zweite Teil des Gehäuses auch durch eine Hülse ersetzt werden. Es ist also möglich, einen Bausatz für Schnellentlüftungsventile vorzusehen, der eine Schraube zum wahlweisen Verschliessen eines von zwei Einlässen vorsieht, sowie eine Hülse, mit welcher der zweite Teil des Gehäuses ersetzt werden kann.

Ausführungsbeispiele der Erfindung werden nun unter Bezugnahme auf die Zeichnung beschrieben. Es zeigt:
- Figur 1: ein erstes Ausführungsbeispiel eines Schnellentlüftungsventils gemäss der vorliegenden Erfindung,
- Figur 2: ein zweites Ausführungsbeispiel eines Schnellentlüftungsventils gemäss der vorliegenden Erfindung,
- Figur 3: ein drittes Ausführungsbeispiel eines Schnellentlüftungsventils gemäss der vorliegenden Erfindung, wobei bei einem Schraubverschluss der nicht benötigte Einlass verschliessbar ist,
- Figur 4: ein Schnellentlüftungsventil wie in Figur 3, wobei jedoch der zweite Gehäuseteil durch eine Hülse ersetzt ist, und
- Figur 5: den Ersatz des Schalldämpfers durch ein Anschlussstück.

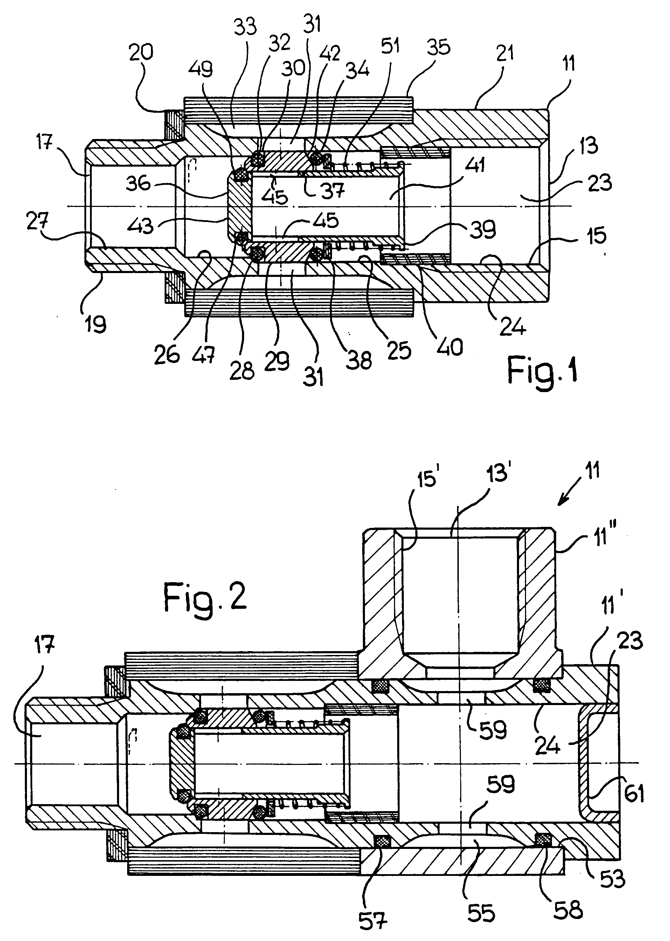

Bei dem in Figur 1 dargestellten ersten Ausführungsbeispiel des Schnellentlüftungsventils besteht das einstückige Gehäuse 11 vorteilhaft aus einem Drehteil, z.B. aus Messing oder aus einer Aluminiumlegierung. Das Gehäuse 11 weist zwei Anschlüsse auf, nämlich einen Einlass 13 mit einem Innengewinde 15 und einem Auslass 17 mit einem Aussengewinde 19. Mit der Bezugsziffer 20 ist ein Dichtring bezeichnet. Je nach Verwendungszweck sind natürlich auch andere Gewinde oder andere Anschlussmittel möglich. Ein sechskantiger Abschnitt 21 erleichtert das Einschrauben des Schnellentlüftungsventils am vorgesehenen Ort, z.B. in ein Gewinde eines pneumatischen Zylinders.

Das Gehäuse 11 besitzt einen Raum 23, vorzugsweise in Form einer koaxialen Bohrung, mit Abschnitten 24, 25, 26, 27 verschiedenen Durchmessers. Der grösste Durchmesser hat der Abschnitt 24, der den Kammereinlass bildet. Etwas kleiner ist der Durchmesser des Abschnitts 25, der die Kammer bildet, in welcher der Kolben 29 hin- und herbeweglich ist. An die Kammer 25 grenzt der Abschnitt 26, der den Kammerauslass bildet und dessen Durchmesser wiederum kleiner ist als jener der Kammer 25 und daher die Bewegung des Kolbens 29 in Richtung zum Auslass begrenzt. Der letzte Abschnitt 27, der sich im Bereich des Gewindes 19 befindet, besitzt den kleinsten Durchmesser.

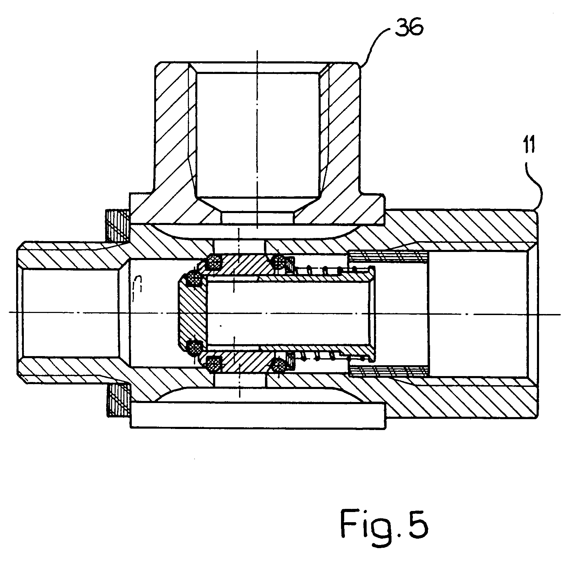

Das Gehäuse 11 weist dort, wo die Kammer 25 an den Abschnitt 26 angrenzt, mindestens eine Entlüftungsöffnung 31 auf, die z.B. die Form einer etwa radial angeordneten Bohrung aufweist. Die Entlüftungsöffnung 31, vorteilhaft vier an der Zahl um neunzig Grad zueinander versetzt, münden in einen Ringraum 33, der beispielsweise durch eine ringförmige Ausnehmung an der Gehäuseaussenseite gebildet ist. Der Ringraum 33 wird von einem Schalldämpfer 35, z.B. aus gesinterten Metallspänen, umschlossen. Wie Fig. 5 jedoch zeigt, kann an Stelle des Schalldämpfers auch ein Anschlussstück 36 auf das Gehäuse 11 aufgeschoben werden.

Der in der Kammer 25 angeordnete Kolben 29 verschliesst in der eingezeichneten Stellung die Entlüftungsöffnungen 31 und den Auslass 17. Um eine gute Abdichtung zu gewährleisten sind zwei Dichtungen 32, 34 in Form von O-Ringen aus einem elastomeren Material vorgesehen. Es ist ersichtlich, dass der Kolben 29 in seiner Bewegung einerseits durch Anschlagen der Dichtung 32 am Absatz 28 und andererseits durch Anschlagen des Ringes 38 am Ring 40 begrenzt wird. Die Nut 30 ist etwas tiefer als der Durchmesser des Ringquerschnitts des O-Rings 32. Infolgedessen verursacht der O-Ring 32 keine Reibungskräfte bei einer Bewegung des Kolbens 29. Der O-Ring 32 sorgt aber für eine sichere Dichtung, wenn er beim Auftreten des Arbeitsdrucks durch den Kolben 29 gegen den Absatz 28 gedrückt wird, der als Ventilsitz dient. Auch der O-Ring 34 verursacht bei einer Bewegung des Kolbens 29 praktisch keine Reibungskräfte. Ist aber der Kolben 29 durch den Arbeitsdruck in die eingezeichnete Lage bewegt worden, so wird der O-Ring 34 durch den Arbeitsdruck in den Raum zwischen dem Konus 42 und der Wandung der Kammer 25 gepresst. Auf diese Weise wird eine gute Abdichtung der Kammer 25 zur Entlüftungsöffnung 31 erreicht. Dank der beschriebenen Ausbildung des Kolbens 29 und der Dichtungen 32, 34 wird somit zur Bewegung des Kolbens 29 lediglich eine sehr geringe Kraft benötigt. Infolgedessen liegt der Oeffnungsdruck des Schnellentlüftungsventils praktisch bei Null.

Der Kolben 29 weist ein Ventil 36 auf, das durch den Arbeitsdruck geöffnet werden kann. Das Ventil 36 besitzt einen in einer Durchgangsöffnung 37 im Kolben 29 angeordneten Ventilkolben 39. Der Ventilkolben 39 ist mit einer axialen Ausnehmung 41, einer Stirnwand 43 und mindestens einer bei der Stirnwand angeordneten etwa radialen Oeffnung 45 versehen. An der Peripherie der Stirnwand 43 ist in einer Nut 47 eine ringförmige Dichtung 49 angeordnet. Die ringförmige Dichtung 49 wird im geschlossenen Zustand des Ventils 36 durch die Kraft einer Ventilfeder 51 an den vorderen Teil des Kolbens 29 gepresst, um die Durchgangsöffnung 37 zu verschliessen.

Das Schnellentlüftungsventil arbeitet wie folgt: Wird dem Eingang 13 Druckluft zugeführt, so wird dadurch der Kolben 29 in die eingezeichnete Stellung bewegt, in welcher er die Entlüftungsöffnungen 31 verschliesst. Der auf den Ventilkolben 39 wirkende Druck bewegt diesen entgegen der Kraft der Ventilfeder 51, so dass Luft durch die Durchgangsöffnungen 37 in den Abschnitt 26 und von dort zum Auslass 17 fliessen kann. Sobald ausgangsseitig praktisch der gleiche Druck herrscht wie eingangsseitig, so schliesst die Feder 51 das Ventil 36.

Herrscht am Einlass 13 kein Druck, soll also eine schnelle Entlüftung erfolgen, wo wirkt der ausgangsseitige Druck auf den Kolben 29, dessen Ventil 36 geschlossen ist, und bewegt ihn bis er am Ring 40 anschlägt. In dieser Stellung gibt der Kolben 29 die Entlüftungsöffnungen 31 frei. Die Entlüftung erfolgt somit vom Auslass 17 her durch die Entlüftungsöffnungen 31 in den Ringraum 33 und von dort durch die Poren des Schalldämpfers 35, falls vorhanden, ins Freie. Da die Querschnitte der Kammer 27, 26 und der Entlüftungsöffnungen trotz der kompakten Bauweise des Schnellentlüftungsventils gross bemessen werden können, hat dieses Ventil eine ausgezeichnete Entlüftungscharakteristik.

Die Ausführungsform von Fig. 2 unterscheidet sich von jener von Fig. 1 grundsätzlich dadurch, dass sie als Winkelverschraubung ausgebildet ist. Zu diesem Zweck ist ein zweiteiliges Gehäuse 11 mit den rechtwinklig zueinander angeordneten Teilen 11′ und 11'' vorgesehen. Diese Teile sind vorteilhaft Drehteile, z.B. aus Messing oder einer Aluminiumlegierung. Es können aber auch hier andere für Ventile brauchbare Materialien und Herstellungsmethoden in Frage kommen. Das zweite Drehteil 11'' besitzt zur Aufnahme des ersten Drehteils 11′ eine Querbohrung 53. Zwischen dem ersten Drehteil 11′ und dem zweiten Drehteil 11'' ist ein ringförmiger Raum 55 vorgesehen. Auf jeder Seite des ringförmigen Raums 55 ist eine Dichtung 57 bzw. 58 vorgesehen. Das erste Drehteil 11′ besitzt mindestens eine radiale Oeffnung 59, die mit dem ringförmigen Raum 55 kommuniziert. Bei diesem Ausführungsbeispiel befindet sich der Einlass 13′ mit dem Innengewinde 15′ im zweiten Teil 11''. Im ersten Teil 11′ ist daher ein Verschluss 61, z.B. eine in den Abschnitt 24 eingepresste Kappe 61, vorgesehen, um den Raum 23 im Bereich des Abschnitts 24 dicht abzuschliessen. Im übrigen ist das Schnellentlüftungsventil von Fig. 2 gleich ausgebildet wie jenes von Fig. 1, so dass auf die dortige Beschreibung verwiesen werden kann.

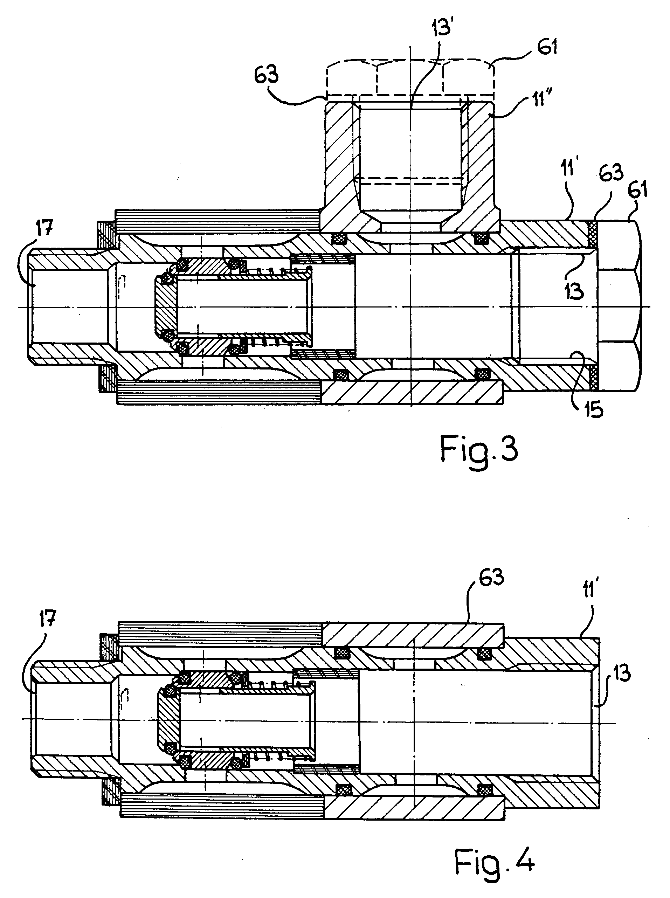

Bei der Ausführungsform von Fig. 3, die ebenfalls wie jene von Figur 2 als Winkelverschraubung ausgebildet ist, kann wahlweise ein Anschluss am Einlass 13 oder 13′ erfolgen. Je nachdem, ob der Einlass 13 oder 13′ benützt wird, wird der andere Einlass mit einem Schraubverschluss 61 und einem Dichtring 63 verschlossen. Um dies zu ermöglichen, ist der Einlass 13 mit einem Gewinde 15 versehen.

Figur 4 betrifft die gleiche Ausführungsform wie in Figur 3, wobei aber ersichtlich ist, dass, wenn keine Winkelverschraubung notwendig ist, das Gehäuseteil 11′ von Figur 3 durch eine ringförmige Hülse 63 ersetzt werden kann.

Es sind verschiedene Aenderungen möglich, ohne von der Idee der Erfindung abzuweichen. So ist dem Fachmann auch ersichtlich, dass das Anschlussstück 36 von Figur 5 auch bei den anderen Ausführungsbeispielen Verwendung finden kann. Das Anschlussstück 36 erlaubt den Anschluss einer Leitung, um das aus dem Schnellentlüftungsventil austretende Medium, z.B. ölhaltige Luft, abzuleiten. Um die Zahl der verschiedenen Teile klein zu halten, ist auch eine Dimensionierung möglich, welche es erlaubt, den Gehäuseteil 11′ und das Anschlussstück 36 identisch auszugestalten.

Zusammenfassend wird folgendes festgestellt: Das Schnellentlüftungsventil besteht im wesentlichen aus dem Gehäuse 11, dem Kolben 29 und dem in der Durchgangsöffnung 37 des Kolbens beweglichen Ventil 36. Das Ventil 36 weist einen Ventilkolben 39 auf, der durch die Ventilfeder 51 normalerweise in der eingezeichneten Lage gehalten wird. Wird dem Eingang 13 Druckluft zugeführt, so wird dadurch der Kolben 29 in die eingezeichnete Stellung bewegt, in welcher er die Entlüftungsöffnungen 31 verschliesst. Der auf den Ventilkolben 39 wirkende Druck bewegt diesen entgegen der Kraft der Ventilfeder 51. Dadurch werden die Durchgangsöffnungen 37 freigelegt, so dass Luft durch diese hindurch zum Auslass 17 fliessen kann. Herrscht eingangs- und ausgangsseitig praktisch der gleiche Druck, so schliesst die Feder 51 das Ventil 36. Wenn eine Entlüftung erfolgen soll, so herrscht am Einlass 13 kein Druck. Infolgedessen wirkt der ausgangsseitige Druck auf den Kolben 29 und bewegt diesen bis er am Ring 40 anschlägt. In dieser Stellung gibt der Kolben 29 die Entlüftungsöffnungen 31 frei. Die Entlüftung erfolgt somit vom Auslass 21 her durch die Entlüftungsöffnungen 31 in den Ringraum 33 und von dort durch die Poren des Schalldämpfers 35, falls ein solcher vorgesehen ist, ins Freie.

## Patentansprüche

1. Schnellentlüftungsventil, mit einem Ventilgehäuse (11), welches eine Kammer (25) mit einem Einlaß (13), einem Auslaß (17) und mindestens einer Entlüftungsöffnung (31) aufweist, einem in der Kammer in axialer Richtung hin- und herbeweglichen Kolben (29), welcher einlaßseitig vom Arbeitsdruck beaufschlagbar ist, um die Entlüftungsöffnung (31) zu sperren, und welcher auslaßseitig vom Abluftdruck beaufschlagbar ist, um die Entlüftungsöffnung (31) freizugeben und einem am Kolben (29) angeordneten Ventil (36), das durch den Arbeitsdruck zum Auslaß hin geöffnet werden kann,
dadurch gekennzeichnet, daß die Entlüftungsöffnung 31) quer zur Bewegungsrichtung des Kolbens angeordnet und zum Sperren durch eine Umfangsfläche des Kolbens (29) abdeckbar ist.

2. Schnellentlüftungsventil nach Anspruch 1, dadurch gekennzeichnet, dass die Kammer (25) eine zylindrische Aussparung, z.B. Bohrung, im Ventilgehäuse (11) ist, dass die Kammer (25) axial und die Entlüftungsöffnung (31) radial angeordnet sind, wobei der Kolben (29), wenn er vom Arbeitsdruck beaufschlagt wird, die Entlüftungsöffnung (31) abdeckt.

3. Schnellentlüftungsventil nach einem der Ansprüche 1 oder 2, dadurch gekennzeichnet, dass der Kolben (29) auslaßseitig eine Dichtung (32), z.B. ein O-Ring, in einer ringförmigen Nut (30) aufweist, welche Dichtung mit einem Ventilsitz (28) am Ende der Kammer (25) zusammenarbeitet, und dass die Nut (30) so tief bemessen ist, dass die Dichtung (32) die Wandung der Kammer (25) nicht berührt.

4. Schnellentlüftungsventil nach einem der Ansprüche 1 bis 3, dadurch gekennzeichnet, dass der Kolben (29) einlaßseitig einen Konus (42) aufweist, und dass beim Konus eine Dichtung (34), z.B. ein O-Ring, vorgesehen ist, welche jeweils durch den Arbeitsdruck gegen den Konus (42) und die Wandung der Kammer (25) gepresst wird.

5. Schnellentlüftungsventil nach einem der Ansprüche 1 bis 4, dadurch gekennzeichnet, dass das Ventil (36) einen in einer Durchgangsöffnung (37) im Kolben (29) angeordneten Ventilkolben (39) aufweist, welcher normalerweise die Durchgangsöffnung (37) verschliesst, aber durch den Arbeitsdruck entgegen der Kraft einer Ventilfeder (51) verschiebbar ist, um die Durchgangsöffnung (37) frei zu geben.

6. Schnellentlüftungsventil nach Anspruch 5, dadurch gekennzeichnet, dass der Ventilkolben (39) eine axiale Ausnehmung (41), eine Stirnwand (43) und mindestens eine bei der Stirnwand (43) angeordnete, etwa radiale Oeffnung (45) aufweist, und dass an der Peripherie der Stirnwand (43) in einer Nut (47) eine ringförmige Dichtung (49) angeordnet ist, welche im geschlossenen Zustand des Ventils (36) durch die Kraft der Ventilfeder (51) gegen den Kolben (29) gepresst wird, um die Durchgangsöffnung (37) zu verschliessen.

7. Schnellentlüftungsventil nach einem der Ansprüche 1 bis 6, dadurch gekennzeichnet, dass die Kammer (25) für den Kolben (29) ein Abschnitt einer Bohrung (23) mit verschiedenen Abschnitten (24, 25, 26, 27) verschiedenen Durchmessers ist, und dass der Hub des Kolbens (29) einerseits durch einen Abschnitt (26) kleineren Durchmessers und andererseits durch einen in einen Abschnitt (24) vorzugsweise grösseren Durchmessers eingeschobenen Ring (40) begrenzt wird.

8. Schnellentlüftungsventil nach einem der Ansprüche 1 bis 7, dadurch gekennzeichnet, dass der Bereich des Ventilgehäuses (11), wo sich die Entlüftungsöffnung (31) befindet, von einem Schalldämpfer (35), z.B. aus gesinterten Metallspänen, umgeben ist.

9. Schnellentlüftungsventil nach einem der Ansprüche 1 bis 8, dadurch gekennzeichnet, dass das Ventilgehäuse (11) einstückig ist und aus einem Drehteil besteht, der zwei Anschlüssen, z.B. Schraubanschlüsse (15, 19), aufweist.

10. Schnellentlüftungsventil nach einem der Ansprüche 1 bis 8, dadurch gekennzeichnet, dass das Ventilgehäuse (11) aus einem ersten (11′) und einem zweiten (11'') Teil, z.B. Drehteil, besteht, die rechtwinklig zueinander angeordnet sind und je einen Anschluss, z.B. einen Schraubanschluss (19, 15′), aufweisen.

11. Schnellentlüftungsventil nach Anspruch 10, dadurch gekennzeichnet, dass das zweite Teil (11'') des Ventilgehäuses (11) zur Aufnahme des ersten Teils (11′) des Ventilgehäuses (11) eine Querbohrung (53) aufweist, wobei ein ringförmiger Raum (55) gebildet wird, und dass das erste Teil (11′) eine radiale Oeffnung (59) besitzt, welche mit dem ringförmigen Raum (55) kommuniziert.

12. Schnellentlüftungsventil nach Anspruch 11, dadurch gekennzeichnet, dass auf jeder Seite des ringförmigen Raums (55) je eine Dichtung (57, 58) angeordnet ist.

13. Schnellentlüftungsventil nach einem der Ansprüche 10 bis 12, dadurch gekennzeichnet, dass die axiale Bohrung (23) auf der dem Auslass (17) entgegengesetzten Seite durch einen Verschluss (61) abgeschlossen ist (Fig. 2 und 3).

14. Schnellentlüftungsventil nach Anspruch 12, dadurch gekennzeichnet, dass sowohl das erste Teil (11′) als auch das zweite Teil (11'') einen Einlass (13, 13′) aufweisen und dass wahlweise der eine oder der andere Einlass (13, 13′) mit einem lösbaren Verschluss (61), z.B. einem Schraubverschluss verschlossen ist.

15. Schnellentlüftungsventil nach einem der Ansprüche 10 bis 12, dadurch gekennzeichnet, dass das zweite Teil 11'' wahlweise durch eine Hülse (63) ersetzbar ist.

16. Schnellentlüftungsventil nach einem der Ansprüche 1 bis 15, dadurch gekennzeichnet, dass die Entlüftungsöffnung (31) von einem Ringkanal (33) umgeben ist, und dass wahlweise ein Schalldämpfer (35) oder ein Anschlussstück (36) über dem Ringkanal angeordnet werden können.

## Claims

1. Rapid air vent valve with a valve housing (11) which has a chamber (25), with an inlet (13), an outlet (17) and at least one air vent opening (31), a piston (29) which is movable to and fro in the axial direction in the chamber and can be supplied on the inlet side with the working pressure in order to close the air vent opening (31) and which can be supplied on the outlet side with the exhaust air pressure in order to open the air vent opening (31), and a valve (36) which is disposed on the piston (29) and can be opened towards the outlet by the working pressure, characterised in that the air vent opening (31) is disposed at right angles to the direction of movement of the piston and can be covered by a peripheral surface of the piston (29) for closure.

2. Rapid air vent valve as claimed in Claim 1, characterised in that the chamber (25) is a cylindrical recess, e.g. bore, in the valve housing (11) and that the chamber (25) is disposed axially arid the air vent opening (31) is disposed radially, the piston (29) covering the air vent opening (31) when the piston is supplied with the working pressure.

3. Rapid air vent valve as claimed in one of Claims 1 or 2, characterised in that the piston (29) has on the outlet side a seal (32), e.g. an O ring, in an annular groove, which seal collaborates with a valve seat (28) at the end of the chamber (25) and that the groove (30) is so deep that the seal (32) does not touch the wall of the chamber (25).

4. Rapid air vent valve as claimed in one of Claims 1 to 3, characterised in that the piston (29) has a cone (42) on the inlet side, and that in the cone a seal (34), e.g. an O ring, is provided which is pressed in each case by the working pressure against the cone (42) and the wall of the chamber (25).

5. Rapid air vent valve as claimed in one of Claims 1 to 4, characterised in that the valve (36) has a piston valve (39) disposed in a passage (37) in the piston (29), which piston valve normally closes the passage (37) but can be pushed by the working pressure against the force of a valve spring (51) in order to open the passage (37).

6. Rapid air vent valve as claimed in Claim 5, characterised in that the piston valve (39) has an axial recess (41), an end wall (43) and at least one approximately radial opening (45) disposed in the end wall (43), and that on the periphery of the end wall (43) there is disposed in a groove (47) an annular seal (49) which in the closed state of the valve (36) is pressed by the force of the valve spring (51) against the piston (29) in order to close the passage (37).

7. Rapid air vent valve as claimed in one of Claims 1 to 6, characterised in that the chamber (25) for the piston (29) is a portion of a bore (23) with different portions (24, 25, 26, 27) of differing diameter, and the stroke of the piston (29) is limited on the one hand by a portion (26) of smaller diameter and on the other hand by a ring (40) inserted into a portion (24) preferably of larger diameter.

8. Rapid air vent valve as claimed in one of Claims 1 to 7, characterised in that the region of the valve housing (11) where the air vent opening (31) is located is surrounded by a sound absorber (35), consisting for example of metal shavings.

9. Rapid air vent valve as claimed in one of Claims 1 to 8, characterised in that the valve housing (11) is made in one piece and consists of one rotary part which has two connections, e.g. screw connections (15, 19).

10. Rapid air vent valve as claimed in one of Claims 1 to 8, characterised in that the valve housing (11) consists of a first (11') and a second (11'') part, e.g. rotary part, which are disposed at right angles to one another and each have a connection, e.g. a screw connection (19, 15').

11. Rapid air vent valve as claimed in Claim 10, characterised in that the second part (11'') of the valve housing (11) has a transverse bore (53) to receive the first part (11') of the valve housing (11), an annular space (55) being formed, and that the first part (11') has a radial opening (59) which communicates with the annular space (55).

12. Rapid air vent valve as claimed in Claim 11, characterised in that a seal (57. 58) is disposed on each side of the annular space (55).

13. Rapid air vent valve as claimed in one of Claims 10 to 12, characterised in that the axial bore (23) on the side opposite the outlet (17) is closed off by a closure (61) (Figures 2 and 3).

14. Rapid air vent valve as claimed in Claim 12, characterised in that both the first part (11') and the second part (11'') have an inlet (13, 13') and that one or the other inlet (13, 13') as required is closed by a releasable closure (61), e.g. a screw closure.

15. Rapid air vent valve as claimed in one of Claims 10 to 12, characterised in that the second part (11') as required can be replaced by a sleeve (63).

16. Rapid air vent valve as claimed in one of Claims 1 to 15, characterised in that the air vent opening (31) is surrounded by an annular channel (33) and that as required a sound absorber (35) or a connecting piece (36) can be disposed over the annular channel.

## Revendications

1. Soupape de purge rapide, comprenant une cage (11) qui comprend une chambre (25) qui comporte une entrée (13), une sortie (17) et au moins un orifice de purge (31), ladite soupape comprenant par ailleurs un piston (29) qui est mobile alternativement en direction axiale dans la chambre, qui peut être exposé du côté de l'entrée à la pression de travail afin de boucher l'orifice de purge (31) et qui peut être exposé du côté de la sortie à la pression de l'air d'évacuation afin de libérer l'orifice de purge (31), ainsi qu'une soupape (36) disposée sur le piston (29) et pouvant être ouverte vers la sortie par la pression de travail, caractérisée en ce que l'orifice de purge (31) est disposé perpendiculairement à la direction de déplacement du piston et peut être recouvert par une surface circonférentielle du piston (29) pour être bouché.

2. Soupape de purge rapide selon la revendication 1, caractérisée en ce que la chambre (25) est un évidement cylindrique, par exemple un alésage réalisé dans la cage (11) de la soupape, en ce que la chambre (25) est disposée axialement et l'orifice de purge (31), radialement et, lorsque le piston (29) est exposé à la pression de travail, il recouvre l'orifice de purge (31).

3. Soupape de purge rapide selon l'une des revendications 1 ou 2, caractérisée en ce que le piston (29) comporte du côté de la sortie une garniture (32), par exemple un joint torique, placée dans une gorge annulaire (30), ladite garniture coopérant avec un siège de soupape (28) situé à l'extrémité de la chambre (25) et en ce que la gorge (30) est dimensionnée de manière à être suffisamment profonde pour que la garniture (32) ne soit pas en contact avec la paroi de la chambre (25).

4. Soupape de purge rapide selon l'une des revendications 1 à 3, caractérisée en ce que le piston (29) comporte un cône (42) du côté de l'entrée et en ce qu'une garniture (34), par exemple un joint torique, qui est prévu à proximité du cône est serrée par la pression de travail contre le cône (42) et la paroi de la chambre (25).

5. Soupape de purge rapide selon l'une des revendications 1 à 4, caractérisée en ce que la soupape (36) comprend un piston de soupape (39) qui est disposé dans un trou de traversée (37) du piston (29) et qui normalement obture le trou de traversée (37), mais est déplaçable par la pression de travail contre la force d'un ressort de soupape (51) pour libérer le trou de traversée (37).

6. Soupape de purge rapide selon la revendication 5, caractérisée en ce que le piston de soupape (39) comprend un évidement axial (41), une cloison extrême (43) et au moins un trou à peu près radial (45) qui est disposé à proximité de la cloison extrême (43) et en ce qu'une garniture annulaire (49) disposée dans une gorge (47) à la périphérie de la cloison extrême (43) est serrée par la force du ressort de soupape (51) contre le piston (29), lorsque la soupape (36) est à l'état de fermeture, afin d'obturer le trou de traversée (37).

7. Soupape de purge rapide selon l'une des revendications 1 à 6, caractérisée en ce que la chambre (25) du piston (29) est une partie d'un alésage (23) comprenant différentes parties (24, 25, 26, 27) de diamètres différents et en ce que la course du piston (29) est limitée d'une part par une partie (26) de petit diamètre et d'autre part par un anneau (40) inséré dans une partie (24) de préférence de diamètre plus grand.

8. Soupape de purge rapide selon l'une des revendications 1 à 7, caractérisée en ce que la région de la cage (11) de la soupape dans laquelle se trouve l'orifice de purge (31) est entourée d'un amortisseur de bruit (35), par exemple de copeaux métalliques frittés.

9. Soupape de purge rapide selon l'une des revendications 1 à 8, caractérisée en ce que la cage (11) de la soupape est en une pièce et consiste en une pièce tournée qui comporte deux raccords, par exemple des raccords à vis (15, 19).

10. Soupape de purge rapide selon l'une des revendications 1 à 8, caractérisée en ce que la cage (11) de la soupape se compose d'une première (11') et d'une seconde (11'') parties, par exemple des pièces tournées, qui sont disposées à angle droit l'une par rapport à l'autre et dont chacune comporte un raccord, par exemple un raccord à vis (19, 15').

11. Soupape de purge rapide selon la revendication 10, caractérisée en ce que la seconde partie (11') de la cage (11) de la soupape comporte un trou transversal (53) de logement de la première partie (11') de la cage (11) de la soupape, un espace annulaire (55) étant formé, et en ce que la première partie (11') comporte un trou radial (59) qui communique avec l'espace annulaire (55).

12. Soupape de purge rapide selon la revendication 11, caractérisée en ce qu'une garniture (57, 58) est disposée sur chaque côté de l'espace annulaire (55).

13. Soupape de purge rapide selon l'une des revendications 10 à 12, caractérisée en ce que l'alésage axial (23) est fermé par un obturateur (61) du côté opposé à celui de la sortie (17) (figures 2 et 3).

14. Soupape de purge rapide selon la revendication 12, caractérisée en ce qu'aussi bien la première partie (11') que la seconde partie (11'') comprennent une entrée (13, 13') et en ce que l'une ou l'autre des entrées (13, 13') est fermée par un obturateur amovible (61), par exemple un obturateur à vis.

15. Soupape de purge rapide selon l'une des revendications 10 à 12, caractérisée en ce que la seconde partie (11'') est remplaçable sélectivement par une douille (63).

16. Soupape de purge rapide selon l'une des revendications 1 à 15, caractérisée en ce que l'orifice de purge (31) est entouré d'un canal annulaire (33) et en ce qu'un amortisseur de bruit (35) ou une pièce de raccord (36) peut être sélectivement disposé au-dessus du canal annulaire.
